# EUROPÄISCHE PATENTSCHRIFT

(11) **EP 1 537 936 B1**
(45) Veröffentlichungstag und Bekanntmachung des Hinweises auf die Patenterteilung: **21.05.2008**
(21) Anmeldenummer: 04025162.1
(22) Anmeldetag: 22.10.2004
(51) Int. Cl.: B23K 5/00, B23K 9/16, B23K 9/29, B23K 9/32, F16K 17/02, F16K 17/04, B23K 26/12, B23K 26/14, B23K 37/00

(54) **Vorrichtung zum Schutzgasschweissen mit einer Rückströmsicherung**
Gas shielding arc welding apparatus with a back draught security device
Dispositif de soudage à l'arc sous gaz de protection avec une dispositif de sécurité de débordement

(30) Priorität: 05.12.2003 DE 10357286
(43) Veröffentlichungstag der Anmeldung: 08.06.2005
(73) Patentinhaber: K.B. Schweissmaschinen Vermietung und Vertrieb GmbH, 31634 Steimbke (DE)
(72) Erfinder: Freye, Christian, 49492 Westerkappeln (DE); Freye, Josef Franz, 49393 Lohne (DE)
(74) Vertreter: Siekmann, Gunnar

(56) Entgegenhaltungen:
- AT-B- 393 978
- DE-A1- 19 512 762
- DE-A1- 19 536 150
- FR-A- 2 517 026
- GB-A- 1 008 616
- US-A- 2 533 729
- PATENT ABSTRACTS OF JAPAN Bd. 2003, Nr. 12, 5. Dezember 2003 (2003-12-05) & JP 2003 240141 A (BIN TAMAHIDE), 27. August 2003 (2003-08-27)

## Beschreibung

Die Erfindung betrifft eine Vorrichtung zum Zuführen von Schutzgas zum Schutzgasschweißen mit wenigstens einer Gasleitung, wobei der arbeitsseitige Endbereich der Gasleitung wenigsten eine im Ausströmbereich des schutzgase angeordnete Zuführeinrichtung aufweist, die eine abschmelzende Drahtelektrode oder eine nicht abschmelzende wolframelektrode aufweist, und mit einer Rückströmsicherung.

Derartige Vorrichtungen zum Schutzgasschweißen finden beispielsweise als WiG-Schweißbrenner oder MAG-Schweißbrenner Anwendung. Es wird unter Erzeugung eines schutzgasumfluteten Lichtbogens, zwischen dem Werkstück und einer abschmelzenden kontinuierlich zugeführten Drahtelektrode beim MAG- Schweißverfahren bzw. nicht abschmelzenden Wolframelektrode unter möglicher Zugabe eines Zusatzwerkstoffes beim WIG- Schweißverfahren, eine Schweißnaht ausgebildet. Die jeweilige Elektrode ist in einer Zuführeinrichtung angeordnet, wobei der Elektrode über einen an der Zuführeinrichtung angeschlossenen Gasleitung das Inert- bzw. Schutzgas zugeführt wird. Bekannt sind auch Formiereinrichtungen bei denen Schutzgase, welche sich aus einem Gas oder mehreren Gasen zusammensetzen können, zugeführt werden, um bevorzugt das Verlegen einer Rohrleitung umzusetzen.

Eine Vorrichtung der eingangs genannten Gattung ist aus der GB-A-1008616 bekannt. Diese Druckschrift offenbart ein Verfahren zum Schutzgasschweißen, bei dem die Zufuhr des zum Schweißen benötigten Inertgases Argon direkt nach dem Beendigen des unmittelbaren Schweißvorganges gestoppt wird. Um die Schweißelektrode vor dem Luftsauerstoff zu schützen und zugleich ein schnelles Abkühlen der Schweißelektrode zu gewährleisten, wird ein zweites, kostengünstiges Inertgas, wie zum Beispiel Stickstoff über die Schweißelektrode geführt. In der an den Schweißbrenner angeschlossenen Gasleitung kann ein Rückschlagventil angeordnet sein.

Aus der DE 19536150 A1 ist eine Vorrichtung zur Gassteuerung eines Plasmabrenners einer Plasmaschneidanlage beschrieben und mit Hilfe der Vorrichtung soll eine verbesserte und zugleich selbsttätige Regelung eines Pilotgases und eines Schneidgases erreicht werden, welche über zwei separate Gasleitungen dem Plasmabrenner zugeführt werden. Bevor die Gasleitungen zu einer Gasleitung, die wiederum an einem Plasmabrenner angeschlossen ist, vereinigt werden, ist vor der Vereinigungsstelle in jeder Gasleitung eine Rückströmsicherung angeordnet. Die Rückströmsicherungen verhindern ein Überströmen des Pilotgases in die Schneidgaszuleitung bzw. ein Überströmen des Schneidgases in die Pilotgaszuleitung.

Es sind weitere Vorrichtungen aus den Druckschriften AT 393978 B, DE 19512762 A1, FR-A-2517026, Patent Abstract of Japan JP 2003240141 A und US-A-2533729 bekannt, die ausschließlich zum Brenngas-Schweißen unter Zugabe eines Brenngas-Sauerstoff-Gemisches eingesetzt werden bzw. in einer Brenngasleitung Anwendung finden.

Bei Vorrichtungen bekannter Ausführung besteht im Einsatz das Problem, daß bei Arbeitsbeginn und nach Unterbrechungen des Schweißvorganges und anschließend direkter Wiederaufnahme der Arbeiten, oftmals die gefertigten Schweißnähte nicht die gewünschte Qualität aufweisen. Diese Probleme treten insbesondere bei hoher Luftfeuchtigkeit auf.

Der Erfindung liegt daher die Aufgabe zugrunde, eine Vorrichtung der eingangs genannten Art zu schaffen, die einen besonders zuverlässigen Prozeß des Schutzgasschweißens, schon von Beginn an und nach kurzen Unterbrechungen der Arbeiten erlaubt.

Die Lösung dieser Aufgabe erfolgt mit einer Vorrichtung mit den Merkmalen des Patentanspruchs 1. Vorteilhafte Weiterbildungen der Erfindung sind in den Unteransprüchen beschrieben.

Bei einer Vorrichtung zum Zuführen von Schutz gas zum Schutzgasschweißen mit wenigstens einer Gasleitung, wobei der Arbeitsseitige Endbereich der Gasleitung wenigstens eine im Ausströmbereich der Schutzgases angeordnete zuführeinrichtung aufweist, die eine abschmelzende Drahtelektrode oder eine nicht abschmelzende wolframelektrode aufweist, und mit einer Rückströmsicherung ist es erfindungswesentlich, daß die Rückströmsicherung im arbeitsseitigen Endbereich der Gasleitung innerhalb der Zuführeinrichtung angeordnet ist, und daß die Rückstromsicherung als Einwegsicherung ausgebildet ist, so daß das Inertgas nur in eine Richtung aus der Gasleitung strömt und keine atmosphärische Luft in die Gasleitung zurückströmen kann. Auf diese Weise wird verhindert, daß bei Unterbrechung des Prozesses des Schutzgasschweißens und somit bei Unterbrechung der Inertgaszufuhr, Luft und vor allem atmosphärischer Sauerstoff in die angeschlossene Gasleitung eintreten kann. Durch die erfindungsgemäße Vorrichtung wird ebenfalls verhindert, daß die in der Umgebungsluft befindliche Feuchtigkeit sich an den Innenwänden der Gasleitung niederschlägt und dadurch bei direkter Wiederaufnahme des Arbeitsprozesses das zugeführte Gas für mehrere Minuten verunreinigt.

Die Erfindung ist bevorzugt für Vorrichtungen geeignet, bei denen durch die Leitungen Reingase zugeführt bzw. Reingasleitungen verwendet werden. Insbesondere kann die Vorrichtung in der Medizintechnik sowie in der Schweißtechnik angewendet werden.

Beim Einsatz der Erfindung verbleibt somit das zugeführte Schutzgas in der Gasleitung, wobei im Falle des MAG-Schweißverfahrens bei Wiederaufnahme des Schweißprozesses ohne wesentliche Zeitverzögerung direkt begonnen werden kann. Des weiteren wird durch die Verwendung der erfindungsgemäßen Vorrichtung speziell beim WIG-Schweißverfahren eine Gaseinsparung erreicht und durch das saubere Gas beim Zünden der Verbrauch von Wolframelektroden verringert. Die Gaseinspannung und die geringe Zeitverzögerung bei Wiederaufnahme der Arbeiten werden durch die kurze Spülzeit von 2 Sekunden zwischen der Rückströmsicherung und der Schutzgasdüse erreicht. Die Erfindung führt daher beim Schweißen unter Schutzgas zu besonders guten Ergebnissen, auch beim VA-Schweißen, Duplexschweißen, Laserschweißen, Titanschweißen und Aluminiumschweißen.

Bevorzugt ist die Rückströmsicherung als Einwegsicherung ausgebildet. Das bedeutet, daß Gas nur in eine Richtung aus der Gasleitung strömt, jedoch keine atmosphärische Luft in die Gasleitung zurückströmen kann. Die aufgesetzte Gasleitung ist in dieser Anwendung der erfindungsgemäßen Vorrichtung bevorzugt ein Gasleitungsschlauch, der bis zu zehn oder mehr Meter lang sein kann und an ein Gasreservoir, insbesondere eine Gasflasche, angeschlossen ist, wobei hier typischerweise eine Absperreinrichtung, insbesondere ein Ventil, vorgesehen ist. Durch die erfindungsgemäße Vorrichtung wird nun verhindert, daß die Gasleitung zwischen den arbeitsseitigen Endbereich und dem Gasreservoir bzw. der an dem Gasreservoir angeordneten Absperreinrichtung bei Arbeitsunterbrechung durch Einströmen der Außenluft verunreinigt wird.

Bevorzugt weist die Rückströmsicherung ein federbelastetes Ventil auf. Das Ventil wird durch eine Federkraft geschlossen gehalten und nur durch Anlegen eines vorbestimmten innenseitigen Gasgegendrucks, der ausreicht, die Federkraft zu überwinden, wird das Ventil geöffnet. Die Rückströmsicherung ist dabei günstigerweise derart ausgelegt, daß sie in einer Grundstellung die Gasleitung sperrt und nur in einer Arbeitsstellung die Gasleitung öffnet, wobei die Arbeitsstellung so definiert ist, daß ein innen anliegender Gasdruck vorbestimmter Stärke vorhanden ist.

Grundsätzlich kann die Rückströmsicherung nach der Art eines aus Autoreifen bekannten Ventils aufgebaut sein.

Insbesondere weist in der geschlossenen Grundstellung der Rückströmsicherung die angeschlossene Gasleitung einen vorbestimmten innenseitig anliegenden Mindestgasdruck auf. Der Überdruck ist in diesem Fall bevorzugt auf eine Größe von 0,4 bar ausgelegt. Durch den in der Gasleitung anliegenden Überdruck kann die Diffusion von gasförmigen Medien, insbesondere Luft, auch durch die Schlauchwand in die Gasleitung verhindert werden.

In einer weiteren bevorzugten Ausgestaltung der Erfindung ist die Zuführeinrichtung als Handstück ausgebildet. Durch diese konstruktive Ausführung kann die Rückströmsicherung in der Zuführeinrichtung untergebracht werden, wodurch ein optimaler Schutz vor Umwelt- und Arbeitseinflüssen erreicht wird. Dabei übersteigt die Lebensdauer der Rückströmsicherung die des verwendeten Brenners.

Selbstverständlich kann die Zuführeinrichtung auch als Bestandteil eines Maschinenbrenners eingesetzt werden, wodurch eine Automatisierung des Schweißprozesses stattfindet. Dabei finden nur Schweißverfahren bzw. Schweißbrenner Anwendung, denen kontinuierlich eine abschmelzende Drahtelektrode zugeführt wird. Des weiteren kann die Zuführeinrichtung in einer Formiereinrichtung angeordnet sein. Das setzt eine gewisse konstruktive Umgestaltung der Zuführeinrichtung voraus, da bestimmte Funktionen in diesem Anwendungsfall nicht eingesetzt werden.

Ein Ausführungsbeispiel der Erfindung, aus dem sich weitere erfinderische Merkmale ergeben, ist in der Zeichnung dargestellt. Es zeigen:
- Fig. 1:: Eine Ansicht einer Zuführeinrichtung mit einer Rückströmsicherung und einem Gasleitungs-Anschluß im Teilschnitt;
- Fig. 2:: Eine durch Einkreisung in Fig. 1 gekennzeichnete Einzelheit II in vergrößertem Maßstab nach Art einer Explosionsdarstellung im Teilschnitt.

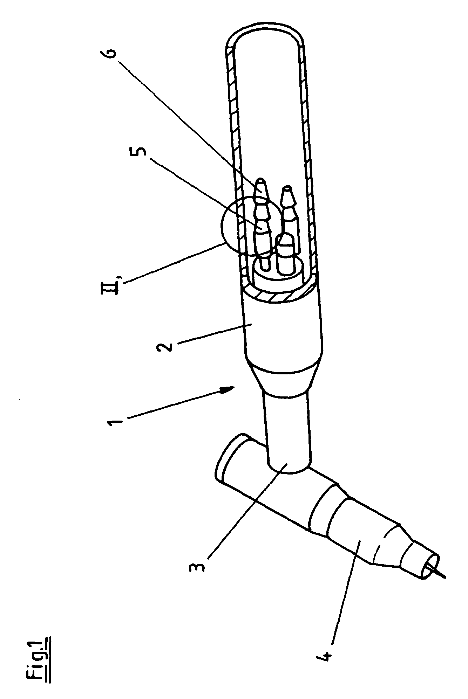

In Fig. 1 ist im Teilschnitt eine Zuführeinrichtung 1 dargestellt. Die Zuführeinrichtung 1, welche sich in diesen Fall aus Brennerkörper 2, Brennerhals 3 und Schutzgasdüse 4 zusammensetzt, weist im Griffbereich derselbigen eine Rückströmsicherung 5 auf. Dabei ist die Rückströmsicherung 5 mit einem Gasleitungs-Anschluß 6 versehen, um die Verbindung mit einer Gasleitung zu ermöglichen. Die dargestellte Zuführeinrichtung 1 ist insbesondere Bestandteil eines WIG-Schweißsystems.

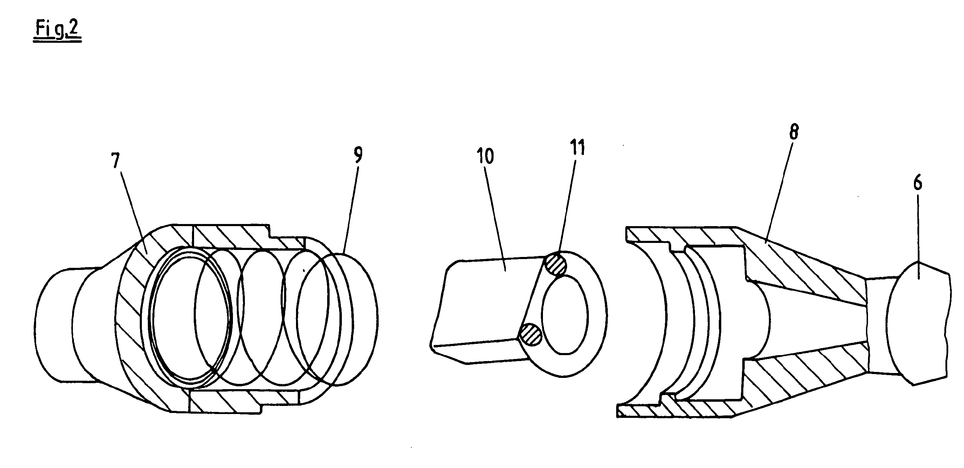

In Fig. 2 ist die in Fig. 1 durch Einkreisung gekennzeichnete Einzelheit II in vergrößertem Maßstab und im Teilschnitt dargestellt. Fig. 2 verdeutlicht nach Art einer Explosionsdarstellung die Funktion und den Aufbau der Rückströmsicherung 5. Die Gehäuseteile 7 und 8 ergeben in Kombination mit der Feder 9, dem Ventil 10 und dem Dichtring 11 die genannte Rückströmsicherung 5. Dabei wird das Ventil 10 an der Innenwand der Gehäusehälfte 7 geführt. Zwischen dem Gehäuseteil 7 und dem Ventil 10 ist eine Feder 9 angeordnet, die dafür sorgt, daß das Ventil 10 mit dem Dichtring 11 durch eine vorbestimmte Federkraft gegen die plane Fläche des Gehäuseteils 8 gedrückt wird. Wird der Druck während des Arbeitsvorgangs erhöht, hebt sich das Ventil 10 einschließlich dem Dichtungsring 11 von der planen Fläche des Gehäuseteils 8 ab. Das Gas strömt dann vorbei am Dichtungsring 11 und dem etwa eine dreieckförmige Querschnittsfläche aufweisenden, Ventil 10 über das Gehäuseteil 7 in die Zuführeinrichtung 1 und gelangt schließlich in den Ausströmbereich der Schutzgasdüse 4, wo es dem Schweißbereich zugeführt wird. Die Gehäuseteile 7 und 8 sind miteinander verpreßt, wobei auch andere Verbindungsmöglichkeiten eingesetzt werden können. Der Gasleitungs-Anschluß 6 welcher am Gehäuseteil 8 angeordnet ist, weist eine materialschlüssige Verbindung mit demselbigen auf.

## Patentansprüche

1. Vorrichtung zum Zuführen von Schutzgas zum Schutzgasschweißen, mit wenigstens einer Gasleitung, wobei der Arbeitsseitige Endbereich der Gasleitung wenigstens eine im Ausströmbereich der Schutzgases angeordnete zuführeinrichtung aufweist, die eine abschmelzende Drahtelektrode oder eine nicht abschmelzende wolframelektrode aufweiset, und mit einer Rückströmsicherung,
**dadurch gekennzeichnet,**
**daß** die Rückströmsicherung (5) im arbeitsseitigen Endbereich der Gasleitung innerhalb der Zuführeinrichtung (1) angeordnet ist, und
**daß** die Rückströmsicherung (5) als Einwegsicherung ausgebildet ist, so daß das Gas nur in eine Richtung aus der Gasleitung strömt und keine atmosphärische Luft in die Gasleitung zurückströmen kann.

2. Vorrichtung nach Anspruch 1, **dadurch gekennzeichnet, daß** die Rückströmsicherung (5) im Bereich des Gasleitungs-Anschlusses (6) der Zuführeinrichtung (1) ausgebildet ist.

3. Vorrichtung nach einem der Ansprüche 1 und 2, **dadurch gekennzeichnet, daß** die Rückströmsicherung (5) ein federbelastetes Ventil (9,10) aufweist.

4. Vorrichtung nach einem der Ansprüche 1 bis 3, **dadurch gekennzeichnet, daß** die Rückströmsicherung (5) derart ausgelegt ist, daß sie in einer Grundstellung die Gasleitung sperrt und nur in einer Arbeitsstellung die Gasleitung öffnet.

5. Vorrichtung nach Anspruch 4, **dadurch gekennzeichnet, daß** eine Arbeitsstellung durch einen innenseitig anliegenden Gasdruck vorbestimmter Stärke definiert ist.

6. Vorrichtung nach einem der vorhergehenden Ansprüche, **dadurch gekennzeichnet, daß** die Gasleitung in der Grundstellung der Rückströmsicherung (5) einen vorbestimmten, innenseitig anliegenden Mindestgasdruck aufweist.

7. Vorrichtung nach einem der Ansprüche 1 bis 6, **dadurch gekennzeichnet, daß** die Zuführeinrichtung (1) als Handstück ausgebildet ist.

8. Vorrichtung nach Anspruch 1 bis 7, **dadurch gekennzeichnet, daß** die Zuführeinrichtung (1) nach einem Maschinenbrenner angeordnet ist.

9. Vorrichtung nach Anspruch 1 bis 8, **dadurch gekennzeichnet, daß** die Zuführeinrichtung (1) Bestandteil einer Formiereinrichtung ist.

## Claims

1. A device for the feeding of protective gas for gasshielded welding with at least one gas line, the operating-side end section of the gas line having at least one feeder mechanism arranged in the outflow area of the protective gas, which has a fusible wire electrode or a non-fusible tungsten electrode and a directional relay,
**characterised in that**
the directional relay (5) is arranged in the operating-side end section of the gas line inside the feeder mechanism (1), and
**in that** the directional relay (5) is modelled as a one-way relay such that the gas only flows out of the gas line in one direction and no atmospheric air can flow back into the gas line.

2. The device according to claim 1, **characterised in that** the directional relay (5) is developed around the gasline connection (6) of the feeder mechanism (1).

3. The device according to any one of claim 1 and claim 2, **characterised in that** the directional relay (5) has a spring-loaded valve (9, 10).

4. The device according to any one of claim 1 to claim 3, **characterised in that** the directional relay (5) is designed such that it shuts the gas line in a resting position and only opens the gas line in a working position.

5. The device according to claim 4, **characterised in that** a working position is defined by a gas pressure of predetermined force applied from inside.

6. The device according to any one of the preceding claims, **characterised in that** the gas line has a predetermined minimum gas pressure applied from the inside when the directional relay (5) is in the normal position.

7. The device according to any one of claim 1 to claim 6, **characterised in that** the feeder mechanism (1) takes the form of a hand-piece.

8. The device according to any one of claim 1 to claim 7, **characterised in that** the feeder mechanism is arranged after a mechanical burner.

9. The device according to any one of claim 1 to claim 8, **characterised in that** the feeder mechanism (1) is an integral part of a forming mechanism.

## Revendications

1. Dispositif pour l'alimentation en gaz de protection en vue du soudage à l'arc en atmosphère inerte, avec au moins une conduite de gaz, la région terminale côté opérationnel de la conduite de gaz comportant au moins un dispositif d'alimentation disposé dans la région d'évacuation du gaz de protection, le dispositif d'alimentation comportant un fil électrode consommable ou bien une électrode de tungstène non consommable, ainsi qu'avec un clapet anti-retour,
**caractérisé en ce que**
le clapet anti-retour (5) est disposé dans la région terminale du côté opérationnel de la conduite de gaz, à l'intérieur du dispositif d'alimentation, et
le clapet anti-retour (5) est conçu comme une sécurité unidirectionnelle, si bien que le gaz s'écoule de la conduite de gaz dans une seule direction et que l'air de l'atmosphère ne peut pas s'infiltrer dans la conduite de gaz.

2. Dispositif selon la revendication 1, **caractérisé en ce que** le clapet anti-retour (5) est conçu dans la région du raccordement (6) de la conduite de gaz du dispositif d'alimentation (1).

3. Dispositif selon l'une des revendications 1 et 2, **caractérisé en ce que** le clapet anti-retour (5) comporte une soupape (9, 10) soumise à l'action d'un ressort.

4. Dispositif selon l'une des revendications 1 à 3, **caractérisé en ce que** le clapet anti-retour (5) est conçu de telle manière, qu'il verrouille la conduite de gaz dans une position de base et n'ouvre la conduite de gaz que dans une position de travail.

5. Dispositif selon la revendication 4, **caractérisé en ce qu'**une position de travail est définie par une pression de gaz d'une force prédéterminée, appliquée du côté intérieur.

6. Dispositif selon l'une des revendications précédentes, **caractérisé en ce que** la conduite de gaz présente une pression de gaz minimum prédéterminée, appliquée du côté intérieur, dans la position de base du clapet anti-retour (5).

7. Dispositif selon l'une des revendications 1 à 6, **caractérisé en ce que** le dispositif d'alimentation (1) est conçu comme une pièce manuelle.

8. Dispositif selon l'une des revendications 1 à 7, **caractérisé en ce que** le dispositif d'alimentation (1) est disposé à la suite d'un chalumeau machine.

9. Dispositif selon l'une des revendications 1 à 8, **caractérisé en ce que** le dispositif d'alimentation (1) est un composant du dispositif de mise en forme.
